# EUROPEAN PATENT APPLICATION

(11) **EP 4 588 566 A1**
(43) Date of publication of application: **23.07.2025**
(21) Application number: 23865902.3
(22) Date of filing: 15.09.2023
(51) Int. Cl.: B01J 37/08, B01J 37/16, B01J 37/06, B01J 35/00, B01J 35/60, B01J 31/16, B01J 23/883

(54) **METHOD OF PREPARING NIMO-MOO3-X POROUS NANORODS AND CATHODE CATALYST FOR WATER ELECTROLYSIS COMPRISING PREPARED NIMO-MOO3-X POROUS NANORODS**

(30) Priority: 16.09.2022 KR 20220117227
(71) Applicant: Hanwha Solutions Corporation, Jung-gu Seoul 04541 (KR); Yonsei University, University-Industry Foundation(UIF)., Seoul 03722 (KR)
(72) Inventor: ROH, Chiwoo, Daejeon 34128 (KR); SONG, Kyu Ho, Daejeon 34128 (KR); KIM, Gil Ho, Daejeon 34128 (KR); KIM, Hansung, Seoul 04194 (KR); SINGU, Bal Sydulu, Seoul 03727 (KR)
(74) Representative: Berggren Oy
(86) International application number: PCT/KR2023/013927
(87) International publication number: WO 2024/058606

(57) **Abstract**

The present disclosure relates to a method of preparing a NiMo-MoO₃₋ₓ porous nanorod catalyst based on a metal-organic framework and a non-precious metal alloy catalyst prepared thereby. The method of preparing a non-precious metal alloy catalyst according to the present disclosure can prepare an alloy catalyst that combine alloys and oxides and form nanorods having porosity and high surface area, and possess excellent HER performance close to that of commercial platinum catalysts.

## Description

### [TECHNICAL FIELD]

### Cross-Reference to Related Application(s)

This application claims priority to and the benefit of Korean Patent Application No. 10-2022-0117227, filed on September 16, 2022, with the Korean Intellectual Property Office, the disclosure of which is incorporated herein by reference in its entirety.

The present disclosure relates to a method of preparing NiMo-MoO₃₋ₓ porous nanorods and a cathode for water electrolysis comprising the NiMo-MoO₃₋ₓ porous nanorods prepared thereby. More specifically, the present disclosure relates to a method of preparing NiMo-MoO₃₋ₓ porous nanorods using a metal-organic framework, and a cathode for water electrolysis comprising the NiMo-MoO₃₋ₓ porous nanorods prepared thereby.

### [BACKGROUND ART]

Hydrogen is drawing attention as a potential next-generation fuel that provides sustainable and clean energy. Water electrolysis is a potential alternative that can produce pollution-free hydrogen, instead of a water vapor reforming method which produces hydrogen by reacting hydrocarbons with water vapor. Water electrolysis is constituted of a hydrogen evolution reaction (HER) at a cathode and an oxygen evolution reaction (OER) at an anode. Catalysts used for water electrolysis are precious metals such as Pt, Ru, and Ir. However, since alkaline electrolysis has little corrosion problems, non-precious metal catalysts based on Ni, Fe, Co and Mo can be used, so that the economic feasibility is high, but the reaction rate of the catalyst is low. Therefore, it is essential to develop a highly active catalyst that can improve the slow reaction rate in alkaline solutions and reduce the high overvoltage.

Precious metal catalysts such as Pt are known to be the most efficient catalysts in HER for alkaline water electrolysis, but due to their scarcity and high cost issues, non-precious metal-based catalysts that can replace them must be developed. In recent years, many studies have been published on HER non-precious metal catalysts such as oxides, sulfides, phosphides, nitrides, and alloys. Among them, NiMo-alloy is evaluated to be highly active in alkaline HER. The synthesis of NiMo alloys exhibiting various HER catalytic activities using the morphology adjustment, surface area, porosity, and metal composition was reported, but they showed lower activity than commercially available Pt/C. In addition, the synthesized NiMo catalyst was utilized by depositing it in the form of a thin film on a substrate, which has not been suitable for application to alkaline anion exchange membrane water electrolysis (AEMWE). Therefore, the development of an efficient NiMo catalyst in powder form that can exhibit low overvoltage and high stability is essential for the commercialization of AEMWE. Generally, structures with permeability such as nanorods, nanowires, and nanoneedles can provide a more effective active area for electrode materials, thereby improving the material or charge transfer efficiency. Therefore, such morphology engineering is an important part for optimal catalyst design. Porous materials derived from metal-organic frameworks (MOFs) have more pores than other catalysts, and thus have various advantages such as large surface area, adaptable morphology, and the like which are important for catalytic action. The present disclosure aims to develop NiMo-MoO₃₋ₓ porous nanorod alloy catalysts derived from MOFs as catalysts for HER in alkaline water electrolysis.

### [Prior Art Literature]

[1] L. Yang, L. Zeng, H. H. Liu, Y. Deng, Z. Zhou, J. Yu, H. H. Liu, W. Zhou, Appl. Catal. B Environ. 2019, 249, 98.
[2] Y. Zhou, M. Luo, W. Zhang, Z. Zhang, X. Meng, X. Shen, H. Liu, M. Zhou, X. Zeng, ACS Appl. Mater. Interfaces 2019, 11, 21998.
[3] H. L, K. Liu, J. Fu, K. Chen, K. Yang, Y. Lin, B. Yang, Q. Wang, H. Pan, Z. Cai, H. Li, M. Cao, J. Hu, Y. Lu, T. Chan, E, Cortes, A. Fratalocchi, M. Liu, Nano energy 2021, 82, 105767.

### [DETAILED DESCRIPTION OF THE INVENTION]

### [Technical Problem]

It is an object of the present disclosure to provide a method of preparing a porous nanorod-shaped NiMo-MoO₃₋ₓ alloy that can exhibit excellent HER activity in an alkaline electrolyte, and a cathode catalyst for water electrolysis comprising the same.

### [Technical Solution]

According to certain embodiments of the present disclosure, there is provided a method of preparing a porous nanorod-shaped NiMo-MoO₃₋ₓ alloy, the method comprising the steps of: preparing a nanorod-shaped NiMo-organic framework containing molybdenum oxide, nickel salt, and imidazole (step 1); heat-treating the nanorod-shaped NiMo-organic framework to prepare a porous nanorod-shaped NiMo oxide (step 2); and performing reduction heat treatment of the porous nanorod-shaped NiMo oxide to prepare a porous nanorod-shaped NiMo-MoO₃₋ₓ alloy (step 3), wherein the x is 0 or more and less than 3.

According to certain other embodiments of the present disclosure, there is provided a cathode catalyst for water electrolysis comprising a porous nanorod-shaped NiMo-MoO₃₋ₓ alloy,
wherein the porous nanorod-shaped NiMo-MoO₃₋ₓ alloy has a diameter of 50 to 300 nm and a length of 1 to 5 µm.

### [Advantageous Effects]

A porous nanorod-shaped NiMo-MoO₃₋ₓ alloy prepared using a metal-organic framework according to the preparation method of the present disclosure has improved electrical conductivity and a high surface area due to its porosity, and when used as a cathode catalyst for water electrolysis, it can exhibit excellent HER activity in an alkaline electrolyte due to a combination of the alloy and oxide.

In addition, the preparation method of the present disclosure can efficiently mass-produce a porous nanorod-shaped NiMo-MoO₃₋ₓ alloy.

### [BRIEF DESCRIPTION OF THE DRAWINGS]

FIG. 1 shows a schematic diagram of a method of preparing NiMo-MoO₃₋ₓ porous nanorods using a metal-organic framework according to certain embodiments of the present disclosure and a reaction mechanism for each preparation step.
FIG. 2 shows a graph comparing FT-IR (Fourier-transform infrared spectroscopy) results of Ni-Mo-MOF-NR, NiMoO₄-PNR, and NiMo-MoO₃-PNR according to certain embodiments of the present disclosure.
FIG. 3 shows a graph comparing BET (Brunauer-Emmett-Teller) analysis results of Ni-Mo-MOF-NR, NiMoO₄-PNR, and NiMo-MoO₃-PNR according to certain embodiments of the present disclosure.
FIG. 4 shows a scanning electron microscope (SEM) image of MoO₃ (a), High-resolution Transmission Electron Microscope (HR-TEM) images of Ni-Mo-MOF-NR (b), NiMoO₄-PNR (c), and NiMo-MoO₃-PNR (d, e), selected area diffraction (SAED) pattern of NiMo-MoO₃-PNR (f), and Energy Dispersive Analysis X-Ray (EDAX) mapping image (g) according to certain embodiments of the present disclosure.
FIG. 5 shows an X-ray diffraction (XRD) pattern images of NiMoO₄-PNR according to certain embodiments of the present disclosure and NiMo-MoO₃-PNR prepared by varying the heat treatment temperature to 400, 500, 600, 700, and 800°C.
FIG. 6 shows a graph comparing X-ray photoelectron spectroscopy (XPS) results measured on Ni-2p and Mo-3d for NiMo-MoO₃-PNR prepared by varying the heat treatment temperature to 400, 500, 600, 700 and 800°C according to certain embodiments of the present disclosure.
FIG. 7 shows a graph comparing the HER performance of Ni-Mo-MOF-NR, NiMoO₄-PNR, NiMo-MoO₃-PNR, and NiMo-MoO₃/C-NPNR according to certain embodiments of the present disclosure with Pt/C using linear sweep voltammetry (LSV).
FIG. 8 shows a graph comparing the HER performance using linear sweep voltammetry (LSV) of NiMo-MoO₃-PNR prepared by varying the heat treatment temperature to 400, 500, 600, 700 and 800°C according to certain embodiments of the present disclosure.
FIG. 9 shows a graph comparing the Tafel slopes of NiMo-MoO₃-PNR and Pt/C prepared by varying the heat treatment temperature to 400, 500, 600, 700, and 800°C according to certain embodiments of the present disclosure.
FIG. 10 shows a graph comparing the double layer capacitance of NiMo-MoO₃-PNR prepared by varying the heat treatment temperature to 400, 500, and 600°C according to certain embodiments of the present disclosure.
FIG. 11 shows a graph comparing the EIS (Electrochemical Impedance Spectroscopy) of NiMo-MoO₃-PNR and NiMo-MoO₃/C-NPNR and Pt/C according to certain embodiments of the present disclosure.
FIG. 12 shows a graph comprising HER performance using linear sweep voltammetry (LSV) before and after 100,000 cycle test of NiMo-MoO₃-PNR (a), and durability test graph using chrono-potentiometry (b) measuring 10, 50, and 10 mA cm⁻² for 1 hour, 100 hours, and 1 hour, respectively, for a total of 102 hours according to certain embodiments of the present disclosure.
FIG. 13 shows a SEM image of NiMo-MoO₃-PNR after 100,000 cycle test.

### [DETAILED DESCRIPTION OF THE EMBODIMENTS]

The terms "first," "second," etc. are used herein to described various elements, and these terms are only used to distinguish one constitutional element from the other constitutional elements.

Also, the technical terms used herein is for the purpose of describing exemplary embodiments only and is not intended to limit the scope of the invention. The singular forms "a," "an" and "the" are intended to include plural forms, unless the context clearly indicates otherwise. It should be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case in which a layer or an element is described as being formed "on" layers or elements, it means that the layer or element is directly formed on the layers or elements, or it means that other layers or elements may be additionally formed between the layers, on a subject, or on a substrate.

While the present disclosure may be modified in various ways and take on various alternative forms, specific embodiments thereof are shown in the drawings and described in detail below. However, it should be understood that there is no intent to limit the present disclosure to the particular forms disclosed, but on the contrary, the present disclosure covers all modifications, equivalents, and alternatives falling within the spirit and scope of the present disclosure.

As used herein for the convenience of description, the term "Ni-Mo-MOF-NR" means a nanorod-shaped NiMo-organic framework, "NiMoO₄-PNR" means a porous nanorod-shaped NiMo oxide, and "NiMo-MoO₃-x-PNR" means a porous nanorod-shaped NiMo-MoO₃₋ₓ alloy.

Now, a method of preparing NiMo-MoO₃₋ₓ porous nanorods according to certain embodiments of the disclosure will be described in detail.

A method of preparing a porous nanorod-shaped NiMo-MoO₃₋ₓ alloy according to certain embodiments of the disclosure comprises:
a step of preparing a nanorod-shaped NiMo-organic framework containing molybdenum oxide, nickel salt, and imidazole (step 1);
a step of heat-treating the nanorod-shaped NiMo-organic framework to prepare a porous nanorod-shaped NiMo oxide (step 2); and
a step of performing reduction heat treatment of the porous nanorod-shaped NiMo oxide to prepare a porous nanorod-shaped NiMo-MoO₃₋ₓ alloy (step 3).

In the NiMo-MoO₃₋ₓ, x is 0 or more and less than 3. Specifically, x may be 0 or more and 1 or less, or 0.5 or less or 0.3 or less.

In the step 1, the molybdenum oxide may be molybdenum dioxide (MoO₂) or molybdenum trioxide (MoO₃). Preferably, it may be molybdenum trioxide (MoO₃).

In the step 1, the nickel salt may be a nickel halide. Specifically, it may be a nickel halide containing a halogen atom selected from the group consisting of halogens F, Cl, Br, and I. Preferably, the nickel salt may be nickel chloride (NiCl₂).

Specifically, the step 1 may comprise a step of dispersing molybdenum oxide, nickel salt, and imidazole in a solvent in the form of solids and stirring them, a step of refluxing the mixture; a step of separating the precipitate after the refluxing step, followed by washing and drying to obtain a nanorod-shaped NiMo-organic framework. The solvent may be deionized water.

In the step 1, imidazole functions as a ligand to form a complex with molybdenum oxide and nickel salt, which may be expanded into a nanorod-shaped polymer. In particular, the reaction between molybdenum oxide and imidazole is possible only when nickel salt is present. This is because the unshared electron pairs of the two nitrogen atoms of the imidazole molecule are transferred to molybdenum by the reaction mechanism to form a covalent bond with molybdenum oxide, and the two Mo-O⁻ formed at this time must be neutralized by Ni²⁺. Therefore, even if the molar ratio of the charging amount of nickel and molybdenum precursor changes, the final product always maintains a molar ratio of 1:1. This reaction mechanism induces one-dimensional growth of the NiMo-organic framework to produce a nanorod morphology.

In the step 2, the nanorod-shaped NiMo-organic framework prepared in the step 1 is heat-treated in an air atmosphere, so that the imidazole constituting the organic framework is thermally decomposed to form a porous structure, and the molybdenum oxide and nickel salt react to form NiMo oxide, thereby preparing a porous nanorod-shaped NiMo oxide. Specifically, the NiMo oxide may be NiMoO₄.

The heat treatment temperature of the step 2 may be 350 to 600°C. Specifically, the heat treatment temperature of the step 2 may be 350°C or more, 400°C or more, or 450°C or more, and 600°C or less, 550°C or less, or 500°C or less.

If the heat treatment temperature of the step 2 is too low, there may be a problem in that imidazole is not sufficiently thermally decomposed, pores are not formed, and NiMo oxide is not formed. When the heat treatment temperature is 500°C or more, there is no mass change due to imidazole decomposition, and thus, there is no reason to increase the temperature any longer.

The step 3 is a step of reducing the porous nanorod-shaped NiMo oxide formed in step 2 through reduction heat treatment to prepare a porous nanorod-shaped NiMo-MoO₃₋ₓ alloy, wherein the heat treatment temperature may be 500°C or more. Specifically, the heat treatment temperature of step 3 may be 500°C or more, 550°C or more, 600°C or more, or 650°C or more, and 800°C or less, 750°C or less, or 700°C or less.

If the heat treatment temperature of step 3 is too low, the reduction of NiMo oxide is performed incompletely to produce a mixture of alloy and precursor NiMo oxide (NiMoO₄-NiMo-MoO₃), which may cause a problem in that the catalytic efficiency is low when used as a water electrolysis catalyst. On the other hand, if the heat treatment temperature is too high, phase separation occurs between the Ni₃Mo alloy and the Mo single metal, which may cause a problem in that the porous nanorod topology is destroyed into a non-porosity.

Further, the heat treatment of step 3 can be performed in a hydrogen and inert gas mixed atmosphere. Specifically, the inert gas may be argon.

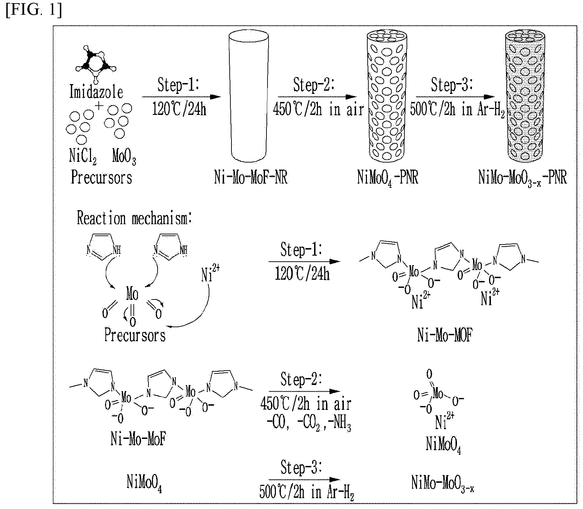

The Ni to Mo atomic ratio of the porous nanorod-shaped NiMo-MoO₃₋ₓ alloy prepared in the step 3 is always fixed at 1:1. Specifically, referring to the reaction mechanism of FIG. 1, the reaction between MoO₃ and imidazole is possible only when Ni²⁺ is present, and as a result, even if the molar ratio of the charging amount of Ni and Mo precursor is changed, the final product is fixed at 1:1. At this time, oxygen may be contained at 10 to 20 wt.%, specifically 15 to 17 wt.%.

Additionally, the cathode catalyst for water electrolysis according certain embodiments of the present disclosure includes a porous nanorod-shaped NiMo-MoO₃₋ₓ alloy. The porous nanorod-shaped NiMo-MoO₃₋ₓ alloy may have a diameter of 50 to 300 nm and a length of 1 to 5 µm.

The porous nanorod-shaped NiMo-MoO₃₋ₓ alloy may have a porous structure including pores, and the pores may be 10 to 25 nm.

The porous nanorod-shaped NiMo-MoO₃₋ₓ alloy may have a surface area of 50 to 100 m²/g.

The porous nanorod-shaped NiMo-MoO₃₋ₓ alloy included as a cathode catalyst for water electrolysis has characteristics that MoO₃ active sites are effective in cleaving H--OH bonds, NiMo alloy active sites are effective in converting intermediates into H₂ molecules. If the alloy has a large surface area through the porous structure, surface contact between the electrode material and the electrolyte is improved, so that the ion transport rate is accelerated, the charge transfer resistance is lowered, and the active sites are increased, so that the catalytic activity can be increased. Therefore, the presence of MoO₃ can help increase the catalytic activity.

Hereinafter, preferable examples are presented for better understanding the present disclosure. However, the following examples are for illustrative purposes only and are not intended to limit and the present disclosure.

### Preparation Example: Preparation of porous nanorod-shaped NiMo-MoO₃ alloy using MOF

(Step 1) 1.0 g of molybdenum oxide (MnO₃), 1.63 g of nickel chloride (NiCl₂), and 2.67 g of imidazole were placed in a round bottom flask, dispersed in 200 ml of deionized water, and then stirred at room temperature for 5 minutes. The mixture was refluxed in an oil bath at 120°C for 24 hours. The precipitate was recovered from the flask, washed with deionized water and ethanol, and then dried at 60°C for 12 hours to obtain Ni-Mo-MOF-NR.

(Step 2) Then, the Ni-Mo-MOF-NR was heated at a heating rate of 2°C/min in an air atmosphere, and heat-treated at 450°C for 2 hours to prepare a light yellow NiMoO₄-PNR.

(Step 3) 200 mg of the NiMoO₄-PNR was heated at a heating rate of 5°C/min in an atmosphere of 70% argon and 30% hydrogen, and heat-treated at 500 °C for 2 hours, and then cooled to room temperature to obtain a black NiMo-MoO₃-PNR.

### Experimental Example 1

Experiment was conducted to confirm the formation of Ni-Mo-MOF-NR, NiMoO₄-PNR, and NiMo-MoO₃-PNR of Preparation Example. The mass ratio and atomic ratio of Ni and Mo of Ni-Mo-MOF-NR, NiMoO₄-PNR, and NiMo-MoO₃-PNR were confirmed through ICP-AES (Inductively coupled plasma atomic emission spectroscopy) analysis, and are shown in Table 1 below. The remainder of the total mass ratio and atomic ratio in Table 1 below was the oxygen content.

**[Table 1]**

| | Ni-Mo-MOF-NR | | NiMoO₄-PNR | | NiMo-MoO₃-PNR | |
|---|---|---|---|---|---|---|
| | Wt% | At% | Wt% | At% | Wt% | At% |
| Ni | 19.55 | 7.56 | 26.55 | 15.75 | 31.58 | 31.43 |
| Mo | 31.33 | 7.42 | 43.02 | 15.62 | 52.35 | 31.88 |

As shown in Table 1, it was confirmed that the atomic ratio of Ni and Mo was maintained at 1: 1 regardless of the preparation step. In addition, as shown in Table 2, even when the Ni:Mo ratio was changed by varying the concentration of the initial Ni salt and MoO₃ salt, the ratio of Ni and Mo in Ni-Mo-MOF-NR always showed 1: 1.

**[Table 2]**

| Imidazole (mg) | NiCl₂.6H₂O (mg) | MoO₃ (mg) | Ni:Mo ratio | Ni-Mo-MOF-NR | | Ni:Mo ratio |
|---|---|---|---|---|---|---|
| | | | | Ni (at.%) | Mo (at.%) | |
| 2700 | 825 | 1000 | 1:2 | 7.67 | 7.88 | 1:1 |
| 2700 | 1650 | 1000 | 1:1 | 7.56 | 7.42 | 1:1 |
| 2700 | 3300 | 1000 | 2:1 | 7.64 | 7.91 | 1:1 |
| 2700 | 4950 | 1000 | 3:1 | 7.70 | 7.77 | 1:1 |

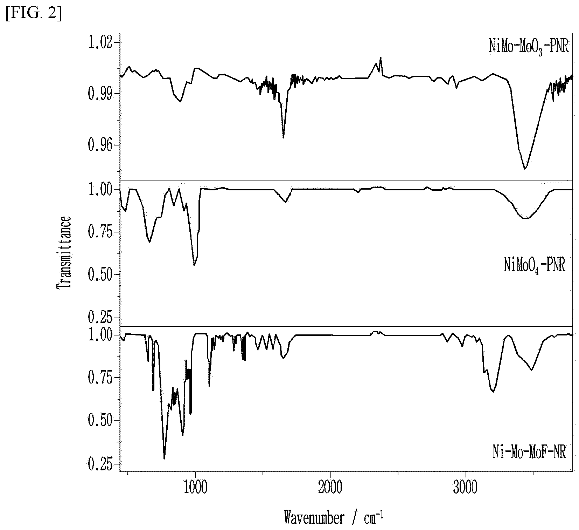

Furthermore, the molecular structure and chemical composition of Ni-Mo-MOF-NR, NiMoO₄-PNR, and NiMo-MoO₃-PNR at each step of Preparation Example were confirmed through FT-IR graphs (FIG. 2). In particular, the FT-IR spectrum of Ni-Mo-MOF-NR showed stretching bands, showing imidazole characteristics at 3430 cm⁻¹ (O-H of H₂O), 3100-3300 cm⁻¹ (N-H/N=H), 2800-3000 cm⁻¹ (C-H), and 1630 cm⁻¹ (C=C). It could be confirmed therefrom that imidazole functions as a ligand in the formation of MOF. The FT-IR spectrum of NiMoO₄-PNR characteristically showed Mo-O-Mo bonds at 807 and 879 cm⁻¹, Mo=O bonds at 965 cm⁻¹, and Ni-O bonds at 633 cm⁻¹, confirming that NiMoO₄ is produced from Ni-Mo-MOF-NR precursor through the removal of the imidazole skeleton during sintering in air. In the FT-IR spectrum of NiMo-MoO₃-PNR, the relatively small peaks at 927, 852, and 578 cm⁻¹ correspond to the Mo=O, Mo₂-O, and Mo₃-O bonds of MoO₃, respectively.

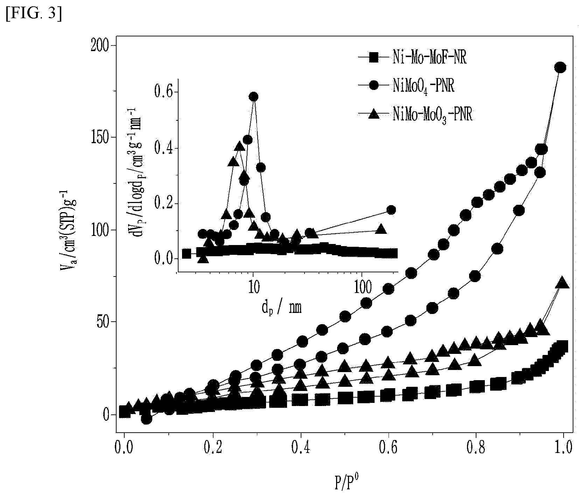

Furthermore, the surface areas of Ni-Mo-MOF-NR, NiMoO₄-PNR, and NiMo-MoO₃-PNR were confirmed using Brunauer-Emmett-Teller (BET) (FIG. 3). It was confirmed that the surface areas of Ni-Mo-MOF-NR, NiMoO₄-PNR and NiMo-MoO₃-PNR were 20.0, 74.5, and 61.6 m² g⁻¹, respectively. Further, it was confirmed that the average pore diameters of Ni-Mo-MOF-NR, NiMoO₄-PNR, and NiMo-MoO₃-PNR were 21.3, 10.0, and 7.4 nm, respectively, and that the pore volumes were 0.05, 0.32, and 0.21 cm³ g⁻¹, respectively, indicating that Ni-Mo-MOF-NR does not have significant porosity. Mesopores were formed in NiMoO₄-PNR due to the decomposition of the imidazole framework during sintering, and this porous structure was maintained even during the thermal reduction of NiMoO₄-PNR to NiMo-MoO₃-PNR. The large surface area and pore volume of the NiMo-MoO₃-PNR catalyst facilitated the contact with the electrolyte, which led to rapid ion transport and enhanced active site generation, thereby increasing the catalytic activity.

### Experimental Example 2

The structures of Ni-Mo-MOF-NR, NiMoO₄-PNR, and NiMo-MoO₃-PNR at each step of Preparation Example were confirmed.

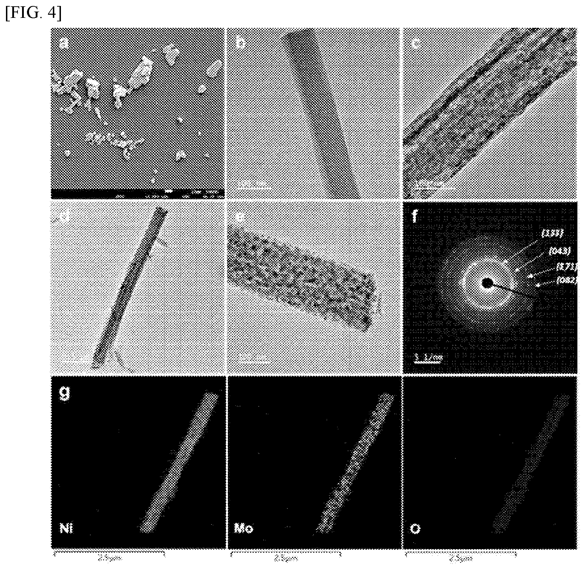

FIG. 4a is a SEM image of MoO₃ used in step 1. Unlike NiMo-MoO₃-PNR formed in the subsequent preparation step, it was confirmed that MoO₃ has a highly irregular structure.

FIG. 4b is a TEM image of Ni-Mo-MOF-NR. It was confirmed through the image that a smooth nanorod structure was formed.

FIG. 4c is a TEM image of NiMoO₄-PNR obtained by heat-treating Ni-Mo-MOF-NR in an air atmosphere. After heat-treating, it was confirmed that imidazole was removed while maintaining the nanorod structure, and pores were formed in the remaining spaces to form a porous surface.

FIGS. 4d and 4e are TEM images of the finally prepared NiMo-MoO₃-PNR. It was confirmed that the porous nanorod structure was maintained even after the reduction heat treatment. It was confirmed that the diameter was about 50 to 300 nm and the length was about 2.5 µm. Specifically, FIG. 4e confirmed that NiMo-MoO₃-PNR had a structure with a high level of porosity (pore size (D₅₀): 10 to 25 nm).

The SAED pattern of NiMo-MoO₃-PNR (FIG. 4f) showed a total of four consecutive diffraction rings. The diffraction rings mean the NiMo-alloy planes (133, 043, 171, and 082), confirming that NiMo-MoO₃-PNR was a crystalline catalyst. The EDAX mapping of NiMo-MoO₃-PNR (FIG. 4g) showed that Ni, Mo, and O were uniformly dispersed.

### Experimental Example 3

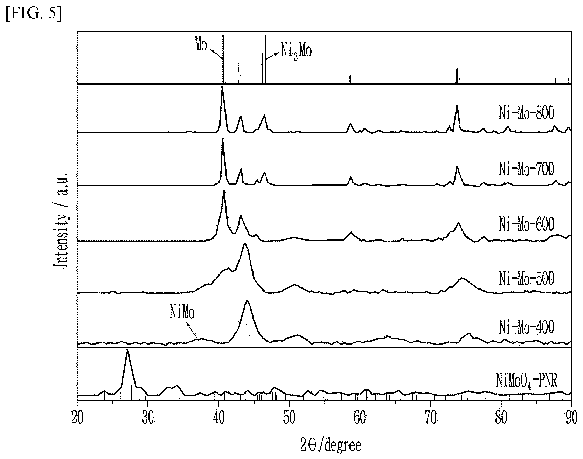

NiMo-MoO₃-PNR was prepared in the same manner as in Preparation Example, except that NiMoO₄-PNR was heat-treated at various temperatures (400, 500, 600, 700, 800°C), and the effect of heat treatment temperature on the physical properties of the NiMo-MoO₃-PNR catalyst was investigated. FIG. 5 shows the XRD patterns of NiMo-MoO₃-PNR according to the heat treatment temperature. The names of the samples according to the temperature are indicated as Ni-Mo-x (x: heat treatment temperature). It was confirmed that NiMo peaks were formed at low heat treatment temperatures (400, 500°C), and Ni₃Mo peaks were formed at high heat treatment temperatures (600, 700, 800°C). As the heat treatment temperature increased, NiMo-MoO₃-PNR was phase separated into Mo and Ni₃Mo, and Mo peak and Ni₃Mo peak were mainly formed.

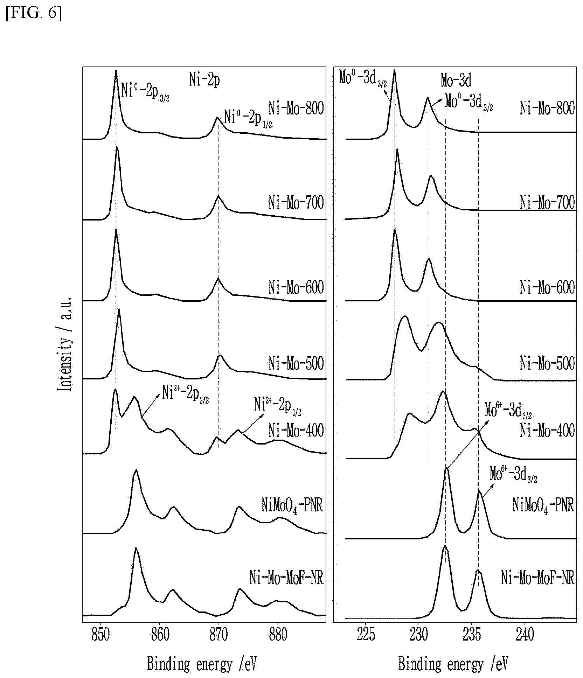

FIG. 6 is a graph comparing the surface composition and electronic state of Ni-Mo-MOF-NR, NiMoO₄-PNR, and NiMo-MoO₃-PNR at different heat treatment temperatures through XPS. The XPS spectra of Ni-Mo-MOF-NR and NiMoO₄-PNR in FIG. 6 have similar Ni 2p and Mo 3d peaks, which indicates that Ni and Mo have the same electronic state (Ni²⁺ and Mo⁶⁺).

The XPS spectrum of NiMoO₄-PNR heat-treated at 400°C indicated that NiMoO₄-PNR was incompletely reduced to produce an alloy and precursor mixture as shown in the following reaction formula (I). On the other hand, when NiMoO₄-PNR was heat-treated at 600°C or more, it was shown that phase separation occurred as shown in the following reaction formula (III). It was confirmed that NiMoO₄-PNR heat-treated at 500°C was constituted of NiMo alloy particles (Ni⁰ and Mo⁰) with traces of MoO₃ through the following reaction formula (II). It was confirmed that the presence of MoO³ helps increase catalytic activity, and thus the heat treatment temperature of 500°C is suitable. If the temperature is higher, phase separation may occur into Mo metal, and if the temperature is too low, reduction may not be sufficient. This can be expressed by the following reaction scheme.

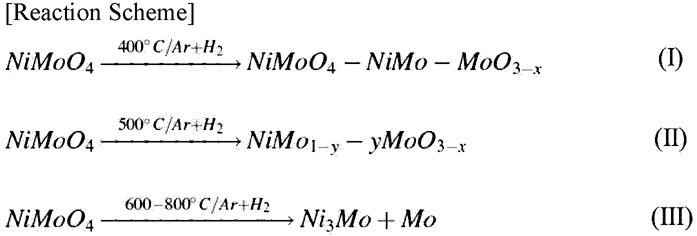

### Experimental Example 4

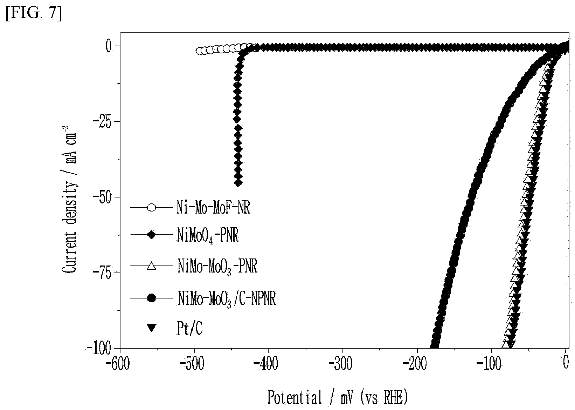

FIG. 7 is a graph showing the HER performance of Ni-Mo-MOF-NR, NiMoO₄-PNR, NiMo-MoO₃-PNR, and NiMo-MoO₃/C-NPNR of Preparation Examples and Pt/C, evaluated using linear sweep voltammetry (LSV) in 1.0 M KOH. NiMo-MoO₃/C-NPNR is a catalyst including a non-porous NiMo nanorod prepared by performing step 3 directly from step 1 without going through the process of carbonizing imidazole in step 2 of FIG. 1. The NiMo-MoO₃-PNR catalyst showed significantly higher HER catalytic activity (24.5 mV @ 10 mA cm⁻²) than not only Ni-Mo-MOF-NR, NiMoO₄-PNR, but also non-porous NiMo-MoO₃/C-NPNR, which showed performance comparable to Pt/C (20.1 mV @ 10 mA cm⁻²).

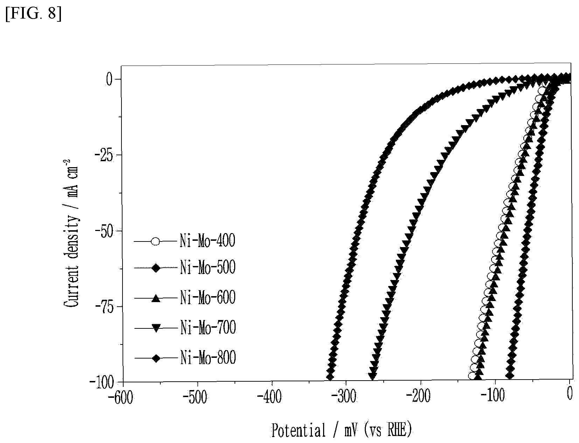

FIG. 8 shows the LSV of NiMo-MoO₃-PNR catalysts prepared by heat-treating NiMoO₄-PNR at different temperatures (400 to 800°C) as in Experimental Example 3. Here, the NiMo-MoO₃-PNR catalyst prepared at 500°C showed the highest HER catalytic activity. This has characteristics that the MoO₃ active site in the NiMo-MoO₃-PNR formed at 500°C is effective in cleaving the H--OH bond, and the NiMo alloy active site is effective in converting the intermediate into H₂ molecules, showing excellent HER activity. In addition, it is considered that it has excellent HER activity due to its porosity, crystal structure, and surface area.

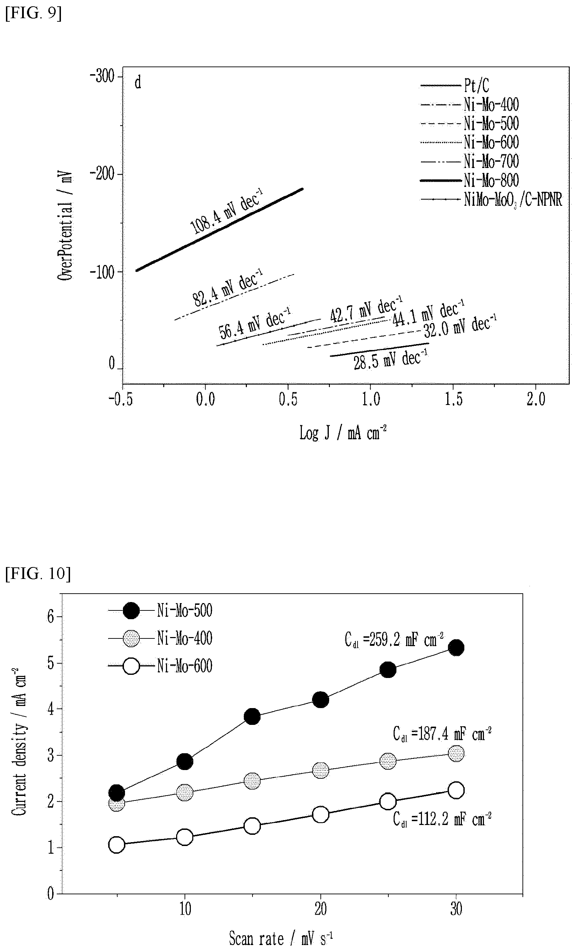

FIG. 9 is a graph showing the Tafel slopes of the NiMo-MoO₃-PNR catalyst and NiMo-MoO₃/C-NPNR and Pt/C prepared by heat-treating NiMoO₄-PNR at different temperatures (400 to 800°C) as in Experimental Example 3. The Tafel slope of the NiMo-MoO₃-PNR prepared at 500°C is 32.0 mV dec⁻¹, showing that the lowest Tafel slope means that the HER kinetics is increased. Also, it is lower than that of nonporous NiMo-MoO₃/C-NPNR (56.4 mV dec-1) and comparable to that of Pt/C (28.5 mV dec⁻¹).

The catalytic activity of NiMo-MoO₃-PNR prepared by the above-mentioned preparation method is compared with that of previously reported NiMo catalysts and is shown in Table 3 below.

**[Table 3]**

| Catalysts | Over-Potential (mV @ 10 mA cm⁻²) | Tafel slope (mV dec⁻¹) | Reference |
|---|---|---|---|
| NiMo-MoO₃-PNR | 24.5 | 32.0 | Present work |
| NiMo | 38 | 31.4 | ACS Appl. Mater. Interfaces. 11 (2019) 21998 |
| NiMo | 65 | 61.4 | ACS Appl. Energy Mater. 2 (2019) 7112 |
| NiMo | 65 | 72 | Adv. Mater. Interfaces. 5 (2018) 1 |
| NiMo | 70 | --- | ACS Catal. 3 (2013) 166 |
| NiMo | 72 | 36.6 | Appl. Catal. B Environ. 249 (2019) 98 |

According to Table 3, it can be seen that the NiMo-MoO₃-PNR of Preparation Example has a superior HER activity than the previously reported NiMo catalyst due to the synergistic effect of the MoO₃ active site and the NiMo alloy active site.

Double-layered capacitance (C_{dl}) was measured to obtain the electrochemical surface areas (ECSA) using cyclic voltammetry (CV). FIG. 10 shows the C_{dl} of NiMo-MoO₃-PNR catalysts prepared by heat-treating NiMoO₄-PNR at different temperatures (400 to 600°C) as in Experimental Example 3. The C_{dl} of NiMo-MoO₃-PNR prepared at 500°C was the highest at 259.2 mF cm⁻², and 400°C and 600°C showed 187.4 and 112.2 mF cm⁻², respectively.

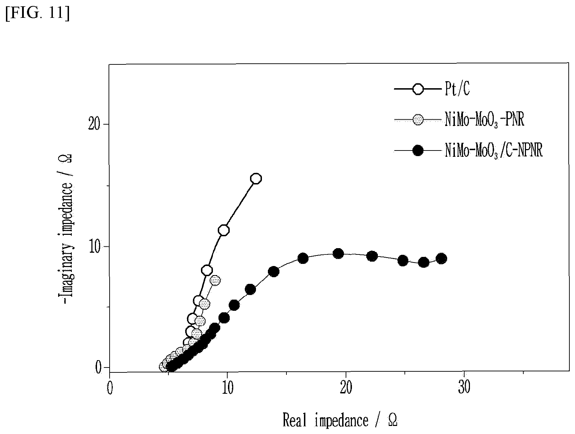

The NiMo-MoO₃-PNR of Preparation Example had the lowest charge-transfer resistance (R_{ct}) compared to Pt/C, and the nonporous NiMo-MoO₃/C-NPNR had a much larger R_{ct} than the porous NiMo-MoO₃-PNR (FIG. 11). The low R_{ct} value of the NiMo-MoO₃-PNR was found to be because the HER catalytic activity was increased due to the porous structure and large surface area.

### Experimental Example 5

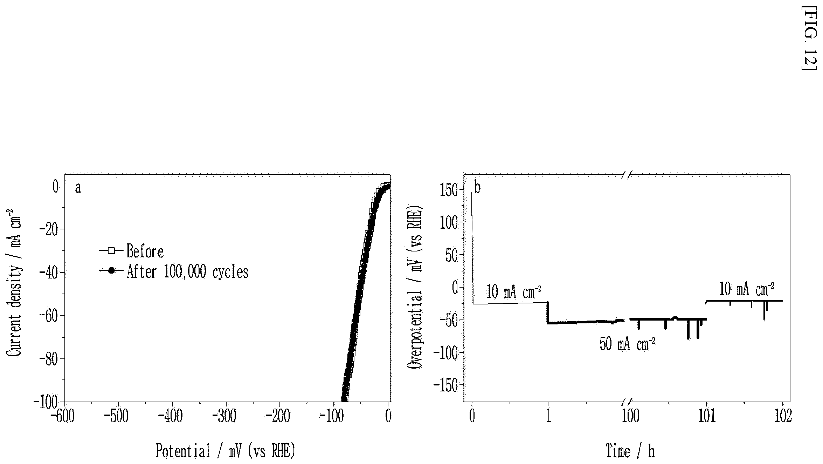

The stability of the NiMo-MoO₃-PNR (FIG. 12a) prepared according to Preparation Example is a graph comparing before and after the 100,000 cycle test, confirming the excellent stability of the catalyst. During the cycle test, the overvoltage of the NiMo-MoO₃-PNR of Preparation Example hardly increased, indicating that the cycle test had little effect on the deterioration of the catalytic activity.

FIG. 12b shows the chrono-potentiometry test graphs of NiMo-MoO₃-PNR prepared according to Preparation Example, measured at different current densities (10, 50, 10 mA cm⁻²) for 1 hour, 100 hours, and 1 hour, respectively, for a total of 102 hours. During the measurement, slight fluctuations in voltage were observed, which appears to be due to the repeated gathering and scattering of H₂ bubbles generated through the HER reaction on the catalyst surface. After 102 hours, the overvoltage confirmed by the V-t curve hardly changed. This shows that the NiMo-MoO₃-PNR catalyst has excellent electrochemical stability and mechanical robustness.

### Experimental Example 6

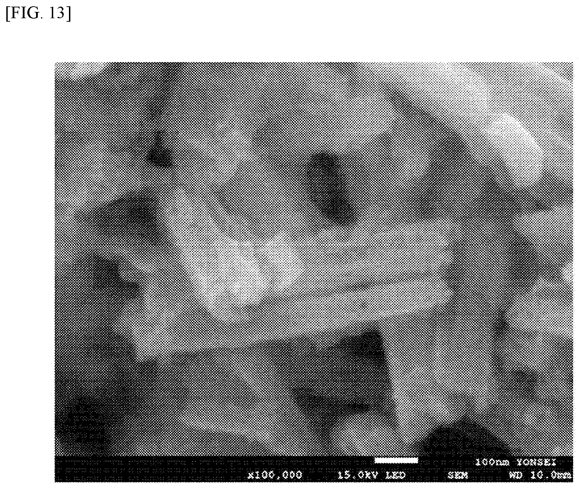

FIG. 13 shows the SEM images of NiMo-MoO₃-PNR prepared according to Preparation Example measured after 100,000 cycle tests. It was found that the nanorod structure was preserved even after the cycle test.

According to the above Experimental Examples, very low overvoltage (24.5 mV) was achieved in the non-precious metal-based catalyst according to the present disclosure, i.e., NiMo-MoO₃-PNR, which has high cycle stability (100,000 cycles) and durability of more than 102 hours. This means that the NiMo-MoO₃-PNR of the present disclosure exhibits excellent efficiency and is easy to use as a cathode catalyst in industrial hydrogen production.

## Claims

1. A method of preparing a porous nanorod-shaped NiMo-MoO₃₋ₓ alloy, the method comprising the steps of:
preparing a nanorod-shaped NiMo-organic framework containing molybdenum oxide, nickel salt, and imidazole (step 1);
heat-treating the nanorod-shaped NiMo-organic framework to prepare a porous nanorod-shaped NiMo oxide (step 2); and
performing reduction heat treatment of the porous nanorod-shaped NiMo oxide to prepare a porous nanorod-shaped NiMo-MoO₃₋ₓ alloy (step 3),
wherein the x is 0 or more and less than 3.

2. The method of preparing a porous nanorod-shaped NiMo-MoO₃₋ₓ alloy according to claim 1,
wherein the molybdenum oxide is molybdenum trioxide (MoO₃).

3. The method of preparing a porous nanorod-shaped NiMo-MoO₃₋ₓ alloy according to claim 1,
wherein the nickel salt is a nickel halide.

4. The method of preparing a porous nanorod-shaped NiMo-MoO₃₋ₓ alloy according to claim 1,
wherein the heat treatment temperature of the step 2 is 350 to 600°C.

5. The method of preparing a porous nanorod-shaped NiMo-MoO₃₋ₓ alloy according to claim 1,
wherein the Ni to Mo atomic ratio of the prepared porous nanorod-shaped NiMo-MoO₃₋ₓ alloy is 1: 1.

6. The method of preparing a porous nanorod-shaped NiMo-MoO₃₋ₓ alloy according to claim 1,
wherein the heat treatment temperature of the step 3 is 500°C or more.

7. The method of preparing a porous nanorod-shaped NiMo-MoO₃₋ₓ alloy according to claim 1,
wherein the heat treatment temperature of the step 3 is performed in a mixed atmosphere of hydrogen and an inert gas.

8. A cathode catalyst for water electrolysis comprising a porous nanorod-shaped NiMo-MoO₃₋ₓ alloy,
wherein the porous nanorod-shaped NiMo-MoO₃₋ₓ alloy has a diameter of 50 to 300 nm and a length of 1 to 5 µm.

9. The cathode catalyst for water electrolysis according to claim 8,
wherein the porous nanorod-shaped NiMo-MoO₃₋ₓ alloy includes pores,
and the pores have a size D₅₀ of 10 to 25 nm.

10. The cathode catalyst for water electrolysis according to claim 8,
wherein the porous nanorod-shaped NiMo-MoO₃₋ₓ alloy has a surface area of 50 to 100 m²/g.
